# EUROPEAN PATENT SPECIFICATION

(11) **EP 3 175 041 B1**
(45) Date of publication and mention of the grant of the patent: **25.11.2020**
(21) Application number: 15827383.9
(22) Date of filing: 24.07.2015
(51) Int. Cl.: E01C 5/00

(54) **GRASS PAVERS FOR INCREASING VISIBLE GREEN SPACE**
GRASPLATTEN ZUR ERHÖHUNG DER SICHTBAREN GRÜNFLÄCHE
DALLES D'HERBE POUR AUGMENTER L'ESPACE VERT VISIBLE

(30) Priority: 29.07.2014 US 201462030286 P
(43) Date of publication of application: 07.06.2017
(73) Proprietor: Oldcastle Building Products Canada Inc., St-John, New Brunswick E2L 4S6 (CA)
(72) Inventor: CASTONGUAY, Bertin, Magog, Québec J1X 4Z9 (CA); PENTERMAN, John, Montréal, Québec H1W 2Z8 (CA); EVANS, Tamara, Montréal, Québec H1E 5J9 (CA); DECLOS, Robert, Montréal, Québec H1M 1Z4 (CA)
(74) Representative: Lavoix
(86) International application number: PCT/CA2015/050695
(87) International publication number: WO 2016/015142

(56) References cited:
- CA-A- 29 378
- CA-A- 45 152
- CA-A- 45 321
- CA-A1- 2 670 469
- CN-Y- 2 311 510
- DE-A1- 2 411 648
- FR-A7- 2 228 363
- GB-A- 1 498 582
- GB-A- 1 600 198
- US-A- 3 421 417
- US-A- 3 557 669
- US-A- 4 067 196

## Description

### BACKGROUND

Commonly made from stone or a cementitious mix, pavers are a popular choice for use in landscaping and/or outdoor construction. Available in a wide variety of shapes, patterns and materials, pavers allow creating many different aesthetically pleasing yet functional structures such as patios, staircases, walkways and roadways. Ideally, paving slabs are designed such that they maximize the durability and lifespan of the structure which they compose.

While the use of pavers is often a necessity, pavers have the undesirable effect of covering green space. Pavers with full surface coverage do not allow vegetation to grow, taking away potential green space and possibly contribute to creating "urban heat islands". Having a green outdoor area is more commonly considered a desirable aesthetic trait, but pavers generally block vegetation from growing in the area which they cover and impede the absorption of water in the underlying soil, possibly causing damage to nearby vegetation.

Some products have attempted to overcome these deficiencies inherent to pavers. One of such inventions is permeable pavers which are either made of a water-permeable material, or are provided with spacers to allow water to drain through adjacent paving slabs. While this solution aids in promoting drainage and water absorption through the underlying soil, it does not overcome the issue of covering up green areas.

Other known products are "turfstone" or "grass" pavers. These are pavers provided with openings in their center, and possibly with patterned edges so that they form more openings when aligned with adjacent paving slabs. These openings allow grass to grow in a pattern inside the paved area, and also allow water to easily drain through. While these pavers aid in solving both the problems of drainage and covering up green space, they have much room for improvement.

Since they are provided with several openings in their body, turfstone pavers are inherently less structurally sound than a solid paving slab. To increase the durability and lifespan of turfstones, current designs need to sacrifice opening sizes in favor of a larger cement or brick structure. This effectively reduces the amount of grass which can grow through the openings, and decreases the visible grass-to-stone ratio. Ideally, the grass-to-stone ratio should be maximized to increase aesthetic appeal, all the while maintaining a maximum structural soundness.

Given the fundamental structural differences in turfstone when compared to regular paving slabs, current solutions relating to structural improvements in regular paving stones cannot be applied to tursftone. As such, there is a need for an improved turfstone or paver design which serves to increase the aesthetic appeal of the paving slab, all the while maintaining an adequate structural strength in terms of durability and lifespan.

GB1600198 relates to a lattice-shaped block or slab to be laid upon sloping ground so that bars of the block or slab are spaced apart in the direction of the slope and webs of the block or slab which interconnect the bars are spaced apart transversely of the slope,

DE2411648 discloses a cellular brick is formed from concrete and it has longitudinal and transverse ribs which cross each other and form rectangular cavities between them. The ends of the ribs project on all sides by half the cavity width beyond the bounding ribs.

### SUMMARY

According to an aspect of the invention, a set of grass pavers according to claim 1 is provided.

In some embodiments of the grass pavers, the longitudinal members define a length of the grass paver, and the transverse members define a width of the grass paver. In this case, the overall surface area is obtained by multiplying the length L and the width W.

Preferably, the void ratio is measured at the upper-plane level corresponding to the topmost, exposed face of the grass paver.

The grass pavers have a "visible surface area", corresponding to the exposed top face of the unitary body. For at least some of the grass pavers, the "visible ratio" of the paver, defined as the visible surface area over the overall surface area, is equal or less than 40%.

Preferably, the grass pavers of a set have their respective recessed portions located in a different pattern/location on the paver, relative to the other ones of the grass pavers. In other word, in a set of pavers, the position of the recessed portions can vary from one paver to the other.

In some embodiments, the recessed portions adjacent to the openings widen toward the bottom face. In other words, the sidewalls of the recessed portions are inclined, slanting from the top to the bottom of the grass paver, such that the bottom face of the recessed portions is greater than their top face. Also preferably, the inner sidewalls of the longitudinal members facing the inner opening flare from the exposed top face toward the bottom face of the paver.

Preferably, each of the grass pavers comprises a water-repellant compound mixed with a material forming the grass pavers. It is also possible that the grass pavers comprise a water-repellant compound applied on an outer surface of the grass paver.

In some embodiments, the intersection of the longitudinal members and the transverse members defines a first radius of curvature delineating the inner opening near the top face of the unitary body, and define a second radius of curvature near the bottom face of the body. The second radius of curvature is preferably greater than the first radius of curvature, such that the radius increases from the top to the bottom face of the paver. This feature advantageously increases structural strength of the paver compared to pavers having the same radius of curvature from the top to the bottom face (or straight inner wall), while preserving aesthetics of the paver, with greater openings near the top face of the paver.

In some embodiments, the longitudinal members and the transverse member include indentations or projections on their outer sidewall, for interlocking of the grass paver with adjacent grass pavers.

The grass pavers have a height defined between the top face and the bottom face. In some embodiments, the extremities of the longitudinal members and of the transverse members have end sidewalls that are concavely shaped or convexly shaped along their height, for vertically interlocking a given grass paver of said set of pavers with adjacent grass pavers.

In some embodiments of the grass pavers, the longitudinal members have their respective upper faces lying exclusively in the same upper-face plane.

The extremities of the transverse members protrude on a single one of the longitudinal members. This means the extremities of the transverse grass pavers are aligned with the outer sidewall of one of the longitudinal member.

In some preferred embodiments of the grass pavers, the inner opening has a rectangular shape.

The set of grass pavers can preferably be installed in a stack bond or a running bond paver arrangement.

### BRIEF DESCRIPTION OF THE DRAWINGS

FIG 1 is a top-perspective view of a grass paver in accordance with an embodiment of the present invention.
FIG 2 is a top-perspective view of a grass paver in accordance with another embodiment of the present invention.
FIG 3 is a top view of the grass paver shown in FIG 1, wherein an upper face of a recessed portion is shown in a squared hatch pattern and a visible surface area is shown in diagonally spaced parallel lines hatch pattern.
FIG 3A is a schematic representation of a possible embodiment of a grass paver, illustrating intersecting transverse and longitudinal members.
FIG 4 is a top view of two grass pavers adjacent to each other in accordance with an embodiment of the present invention.
FIG 4A is side view, fragmented, of what is shown in FIG 4.
FIG 4B is an enlarged view of FIG 4A, of a vertical interlocking mechanism, according to a possible embodiment.
FIG 5 is a top view of two adjacent grass pavers, in accordance with an embodiment of the present invention.
FIGs 5A and 5B are enlarged views of FIG 5, fragmented, of horizontal interlocking mechanisms.
FIG 6 is a top view of two adjacent grass pavers in accordance with an embodiment of the present invention. FIG 6A is an enlarged view of FIG 6, fragmented, of a horizontal interlocking mechanism, according to another possible embodiment.
FIG 7 is a perspective cross-sectional view of one of the grass pavers of FIG 6.
FIG 8 is a top perspective view, fragmented, showing an inner corner of an inner opening of one the grass pavers of FIG 6, according to a possible embodiment of the present invention.
FIG 9 is a top view of a possible paver arrangement obtained by assembling several grass pavers in accordance with a possible embodiment of the present invention.
FIG 10 is a top view of another possible paver arrangement obtained by assembling several grass pavers, in combination with rectangular pavers, in accordance with a possible embodiment of the present invention.

### DETAILED DESCRIPTION OF THE DRAWINGS

In the following description, the same numerical references refer to similar elements. Furthermore, for the sake of simplicity and clarity, namely so as to not unduly burden the figures with several references numbers, not all figures contain references to all the components and features of the present invention and references to some components and features may be found in only one figure, and components and features of the present invention illustrated in other figures can be easily inferred therefrom. The embodiments, geometrical configurations, materials mentioned and/or dimensions shown in the figures are optional, and provided only as examples.

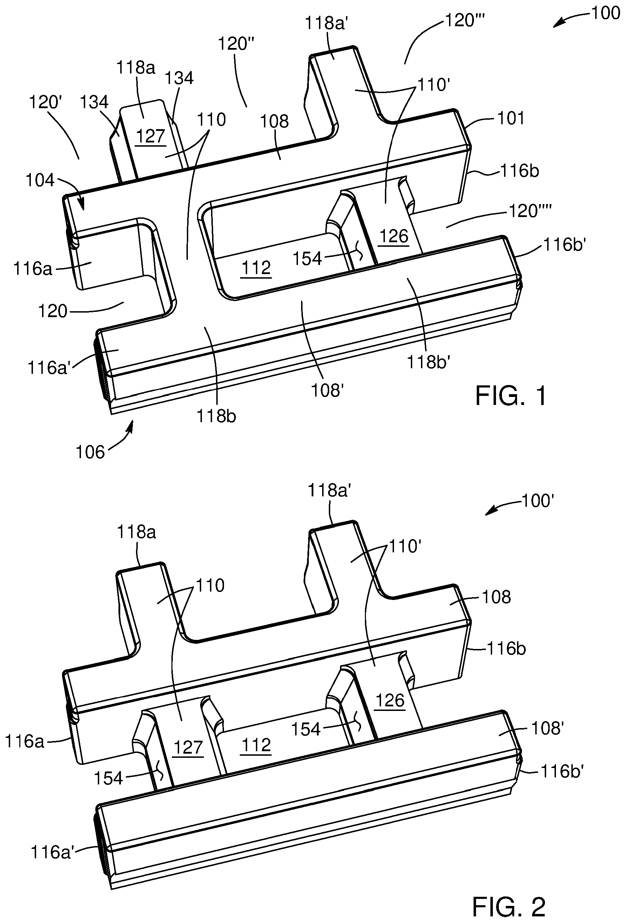

According to an aspect of the present invention, a set of grass pavers for creating a paver arrangement is provided. FIGs 1 and 2 show two possible embodiments of grass pavers, 100 and 100'. A set of grass pavers can include only grass pavers having the same configuration, such as 100 or 100', or a combination of grass pavers, having different configurations, for example comprising both grass pavers 100 and 100'. It is also possible to include in a set grass pavers having more than two different configurations.

Referring to FIG. 1, a grass paver 100 is shown according to a possible embodiment. The grass paver 100 includes a unitary body 101 having a bottom face 106 for contacting a ground surface and an exposed top face 104 for visual exposure. The unitary body 101 of the grass paver 100 is integrally made from a single block and may not be separable without breaking the body. The grass paver 100 is typically made of concrete or other cementitious material, by molding.

The bottom face 106 may be provided with a textured surface to improve adherence to the ground surface. The top face 104 is the visible surface of the grass paver 100 when installed and in use. The grass paver 100 aims to minimize the visible top face 104 in order to increase visible green space and maximize the growth of grass, or other similar vegetation within the structure of the slab. It is therefore preferable to have a smaller top surface 104, all the while maintaining a rigid structure comparable to solid pavement pavers.

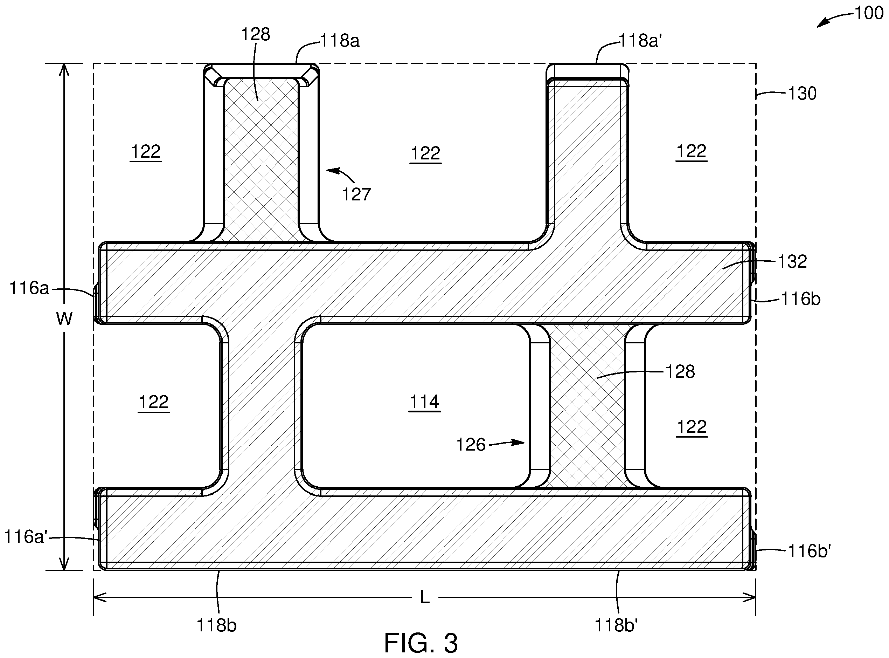

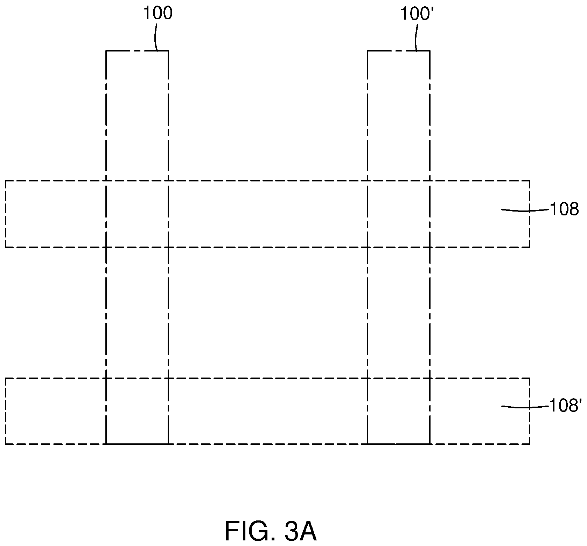

Still referring to FIG.1, the unitary body 101 includes longitudinal members 108, 108' and transverse members 110, 110' intersecting to form an inner opening 112 for growing grass or for receiving other material, such as woodchip or gravel. The longitudinal members 108', 108' are longer than the transverse members. The inner opening 112 has an inner opening area 114, identified in FIG.3. The longitudinal members 108, 108' and transverse members 110, 110' may refer to those portions or members of the unitary body 101 which extend across the unitary body 101 in a horizontal position and in a vertical position, respectively. FIG 3A schematically represent transverse and longitudinal members 108, 108', 110, 110' of a grass paver, configured such as shown in FIGs 1 and 2. The inner opening 112 can refer to a hollow portion located at the center of the grass paver 100. In the illustrated embodiment of FIG 1, the inner opening 112 extends from the top face 104 to the bottom face 106, providing an interstitial space in the unitary body 101 which can be filled with grass or sod.

Still referring to FIG 1, and also to FIGs 2, 3 and 3A, the longitudinal members consist in a pair of parallel longitudinal members 108, 108' and the transverse members consist in a pair of parallel transverse members 110, 110'. This configuration provides rigidity to the unitary body 101 and is easily transportable. Providing the grass pavers with two pairs of intersecting members facilitates assembly of the pavers according to different paving arrangements, as will be explained in more detail later in the description. The transverse members 110, 110' preferably intersect the longitudinal members 108, 108' at right angle. The inner opening 112 thus has a rectangular shape. While a grass paver with two pairs of intersecting longitudinal and transverse members facilitates packaging, transportation and installation, other embodiments of grass pavers can include more than two longitudinal or transverse members.

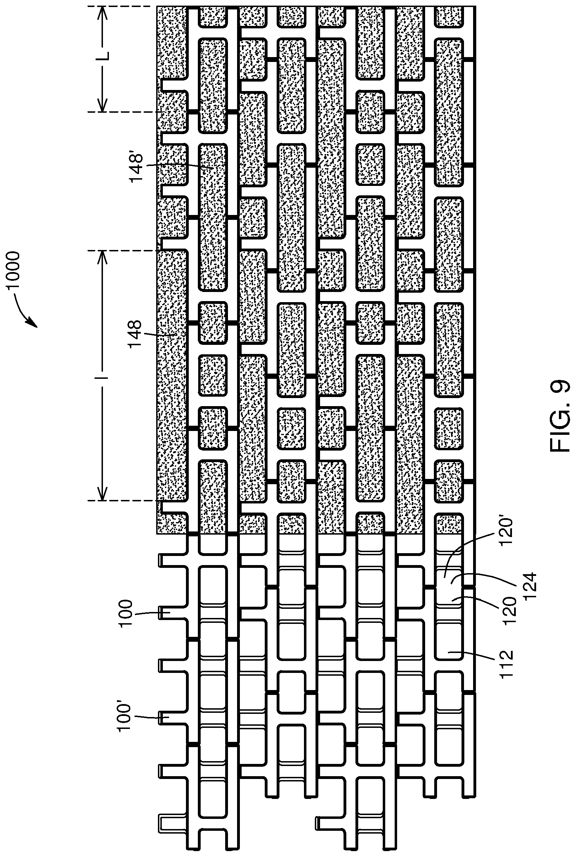

Still referring to FIGs. 1 to 3A, for both embodiments of the grass paver 100 and 100', the unitary body 101 is configured such that the transverse members 110 have one or more recessed portions 126, 127. Of course, in other embodiments, recessed portions could be provided on the longitudinal members as well. In the embodiment of FIG. 1, the recessed portion 126 is located adjacent to the inner opening 112. The recessed portion 126 has an upper face 128 extending below the exposed top face 104 of the unitary body 101. When the grass paver is installed in a paver arrangement, the recessed portion 126 will be hidden by grass, vegetation or other material such as woodchip or gravel. Positioning the recessed portion 126 adjacent the inner opening 112 gives the impression of a larger inner opening than the actual one, since grass or vegetation covers the recessed portion, as best shown in FIG. 9. The sidewalls of the recessed portion 126 are shorter than the rest of the unitary body 101, such that the top face 128 of the recessed portion 126 is at a distance from the top face 104 of the unitary body 101. Such a configuration allows grass that is growing in the inner opening 112 to grow on top of the recessed portion 126, and bridge towards grass growing in an adjacent opening. This essentially hides the recessed portion 126 from a viewer looking at an installed set of grass pavers 100, as it is buried under a layer of grass. The overall percentage of visible grass is thus increased, yet the structure is not compromised as the grass paver 100 still comprises a unitary body 101. Of course, the placement of recessed portions can vary, and can allow the bridging between different patterns of openings. The grass pavers 100 or 100' preferably include more than one recessed portion, such as the additional recessed portion 127 located on the extremity 118a of one of the transverse member 110 for the grass paver 100 of FIG 1, or the recessed portion 127 located on the transverse member 110' for the grass paver 100' of FIG 2.

Referring to the grass paver 100' shown in FIG. 2, the additional recessed portion 127 is also positioned adjacent the inner opening 112, rather than on the protruding extremity of the transverse member 110. Again this configuration can allow for a different patterns arrangement and/or increase the visual grass surface for a more aesthetic look, as best shown in FIG. 9. In other embodiment, at least one of the grass pavers can have its additional recessed portion located in a different pattern/location compared to other ones of the grass pavers from the same set. The recessed portions are preferably confined between intersections of the longitudinal members and transverse members. They can also be confined between the intersection of a longitudinal member with a transverse members, and the extremity of one the transverse members 110, 110'. As can be appreciated, the location of the recessed portions can differ from one paver to the other within the same set of pavers. A paver arrangement formed with grass pavers having different configurations thus have a non-uniform, random look.

Referring to FIGs. 1 to 3A, the longitudinal members 108, 108' and transverse members 110, 110' have respective extremities 116a, 116b; 116a', 116b'; 118a, 118b; 118a', 118b', some of which protrude outwardly from the inner opening 112. Pairs of side-by-side or adjacent extremities 116a, 116a'; 116a, 118a; 118a, 118a'; 118a', 116b; 116b, 116b' form partial openings 120, 120', 120", 120'", 120"", each having respective partial opening areas 122. In these two embodiments, the extremities of the transverse members 110, 110' protrude on a single one of the longitudinal members, *i.e.* on member 108. This configuration allows for the grass pavers 100, 100' to be used in combination with standard rectangular blocks. It also allows for a greater surface of contact with extremities of other grass pavers. A slight drift of the extremities of the transverse members over the side surface of the longitudinal members will not affect the contact surface between two grass pavers.

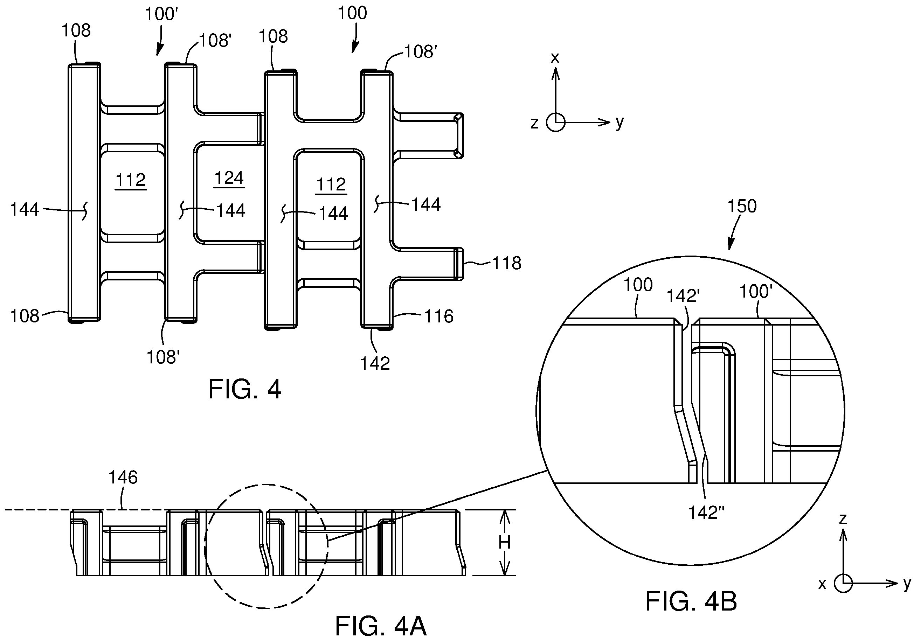

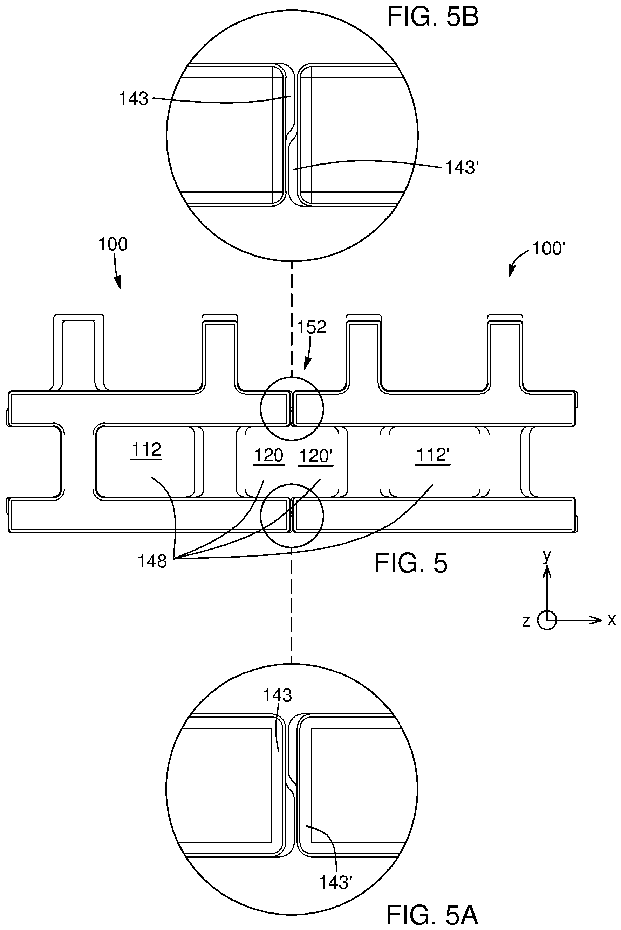

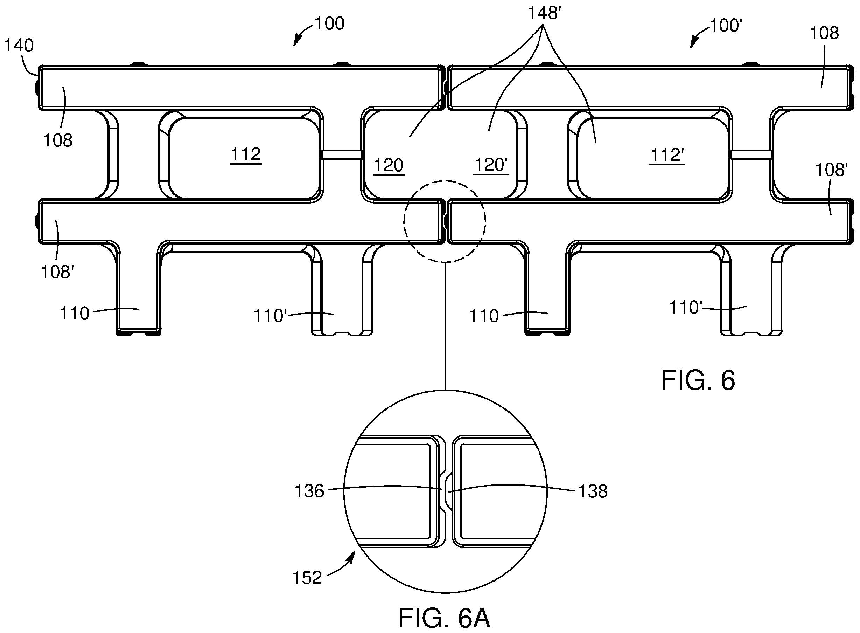

As best illustrated in FIGs 4, 5, 6, 9 and 10, the partial openings of the grass pavers are configured to form complete openings, such as opening 124 identified in FIG 4 and 9, when a given grass paver is assembled with adjacent grass pavers. The partial openings can be closed and transformed into a complete opening 124 by installing an adjacent grass paver or abutting on a surface such as a wall, sidewalk, etc. As shown for example in FIGs 5 and 6, adjacent partial and inner openings 112, 112' 120 and 120' create combined voids 148, 148', giving the impression that the openings are larger than what they actually are. This impression results in part from the position of the recessed portions 126, 127 relative to the inner openings 112.

Referring now to FIG. 3, the overall surface area of a grass paver corresponds to the area enclosing the paver, which for this particular embodiments results in a rectangular area. The overall surface area 130 can be used to estimate the number of grass pavers 100 required for a specific lot. For the grass pavers 100 or 100', the overall surface area 130 is delimited by the extremities 118a, 118b, 118a', 118b', 116a, 116b and 116a', 116b' of the longitudinal and transverse members 108, 108' 110, 100'. In FIG 3, the overall area of the 130 of the grass paver 100 is delineated by the rectangular area shown in dashed lines. The longitudinal members 108 define a length L of the grass paver 100, and the transverse members 110 define a width W of the grass paver 100. The overall surface area 130 is thus obtained by multiplying the length L and the width W.

Still referring to FIG. 3, the grass paver 100 includes a void surface area corresponding to a sum of the inner opening area 114 and of the partial opening areas 122. The void surface area is the area of the grass paver 100 that is devoid of solid composition. Therefore grass or other vegetation is able to extend its roots into the ground beneath the grass paver 100, and absorb nutrients therefrom.

The "void ratio" of the grass paver, defined as the void surface area over the overall area 130, is greater than 50%. The "void ratio" is typically measured at the upper-face plane of the pavers, and corresponds to the area of rectangle 130 which does not include the areas in checkered or hatched lines. While having high void ratios, at least over 50% the grass pavers of the invention can nonetheless be used for vehicular applications. For example, the grass pavers can be used for paving parking lots or for emergency access lanes. This means that each of the grass paver must be able to withstand compressive and flexion loads. The resistance of compression and flexion loads will vary depending on the size, the configuration and the concrete mixture used for forming the grass pavers.

Still referring to FIG. 3, the grass pavers of the invention not only have a high void ratio, which helps growth of vegetation into the opened areas; they also have a high "green space visible ratio", which translates into a low visible ratio of concrete. The "visible ratio" of the grass paver can be defined as the visible surface area 132, corresponding to the exposed top face 104 of the unitary body 101, over the overall surface area 130. This "visible ratio" of a grass paver is preferably equal to 40% or lower. Decreasing the visible surface area 132 increases the visible green space when a set of grass pavers is assembled and forms a paver arrangement, and can be more environmentally friendly because it maintains exposure of the underlying soil. A "visible ratio" as low as 40% is possible thanks to the recessed portions provided on the grass pavers. While it is preferred that the grass pavers be all provided with recessed portions, it is possible that some or all of the grass pavers of a set do not comprise any recessed portion.

The fact that there is more open space through the grass paver allows for more water to be drained. These embodiments are also advantageous with respect to fabrication and shipping. The designs allow for more grass pavers to be created during a fabrication cycle, and allow an increased number of grass pavers to be assembled on a shipping palette.

Referring now to FIGs 4 and 4A, two grass pavers 100 and 100' are shown in a stack bound configuration, *i.e* with their transverse members aligned. One of the partial openings of the grass paver 100' is completed and forms a complete opening 124 when the grass paver 100' is assembled with adjacent grass paver 100. For this configuration of grass pavers, the longitudinal members 108, 108' have respective upper faces 144 lying exclusively in one upper-face plane 146. The upper faces 144 typically coincide with the visible top face 104 of the unitary body 101. This configuration is particularly advantageous since all of the recessed portions are provided on the transverse members, with the longitudinal members having a constant height, rendering the passage/strolling over the paved surface more comfortable.

Referring to FIGs 4A and 4B, a possible embodiment of an interlocking mechanism is shown. FIG 4B better illustrates the vertical interlocking mechanism 150, in which the extremities of the longitudinal members and of the transverse members have end sidewalls 142 that are concavely shaped or convexly shaped along the height H, for vertically interlocking with adjacent grass pavers. The height H of the grass pavers is defined between the top face 104 and the bottom face 106. A first sidewall 142' from a first grass paver 100 is concavely shaped while a corresponding sidewall 142" from a second grass paver 100' is complementarily convexly shaped. When the pavers 100, 100' are assembled, the complementary surfaces interlock and inhibit vertical movement of the grass pavers 100, 100'. With such a configuration, a grass paver rigidly maintains the position in which it was originally placed. A vertical interlock of the grass pavers also advantageously distributes load forces amongst the grass pavers of a paver arrangement, since load applied on the top surface of a grass paver can be transmitted to an adjacent paver thanks to the slanted surfaces of the vertical interlock. This is but one possible embodiment of a vertical interlocking mechanism. Other configurations are also possible, for example where the shapes of the complementary surfaces are varied, or where both the complementary interlocking surfaces are located on the sidewalls of two adjacent longitudinal or transverse members 108, 110.

Referring to FIGs 5, 5A and 5B, a horizontal interlocking mechanism 152 may also be provided. Extremities of grass pavers 100 and 100' are provided with complementary shaped ends 143 and 143'. As such, when the pavers are assembled, the ends 143 and 143' interlock and inhibit horizontal movement of a first paver 100 relative to a second paver 100'. As shown in the presently illustrated embodiment, both the first and second configurations shown in FIGs 5A and 5B may be used on oppositely positioned protruding members in order to inhibit the motion of adjacent slabs in both the +Y and -Y directions concurrently. This is but one possible embodiment of a horizontal interlocking mechanism. Other configurations are also possible, for example where the complementary interlocking surfaces are located one on the end of an extremity of a transverse and/or longitudinal member and one on the sidewall of a transverse and/or longitudinal member, or where the interlocking mechanism inhibits movement in the X-direction. Variations on the shapes of the ends are also possible, for example the ends could be substantially "L"-shaped. In some embodiments, a single configuration of the interlocking mechanism can inhibit motion in both the +Y and -Y directions, such as in the embodiment of FIG. 6.

Another possible embodiment of a horizontal interlocking mechanism 152 is shown in FIGs 6 and 6A. For each of the grass pavers 100, the longitudinal members and the transverse members 108, 110 include indentations 136 or projections 138 on an outer sidewall 140 thereof, for interlocking of the grass paver 100 with adjacent grass pavers 100. The indentations 136 may refer to a groove formed on a portion of the sidewall 140 which may extend to some depth into a surface of the sidewall 140. The indentation 136 may also refer to any feature which may be formed as one or more depressions in the sidewall 140. The projection 138 may include a protrusion of any suitable shape, such as conical, cubical and diamond. The indentations 136 and projections 138 are preferably sized to snugly interlock and prevent lateral movement between the grass pavers 100.

According to the present invention, the grass pavers can also be provided with both horizontal and vertical interlocking mechanisms. As such, in a paving unit comprising several pavers assembled in an end-to-end and in a side-by-side fashion, each individual paver is inhibited from moving in all three of the X, Y and Z directions. The combination of the horizontal and vertical interlocking mechanisms on each paver thus provides an overall 3D interlocking mechanism, giving added rigidity and stability to the assembled pavers.

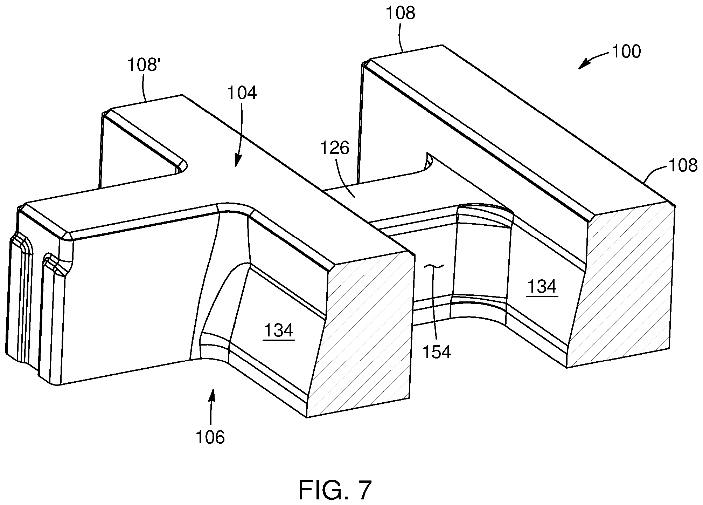

Referring to FIG 7, a cross-section of the grass paver 100 from FIG 6 is shown. In this embodiment, the longitudinal members 108, 108' have some of their sidewalls 134 flaring from the exposed top face 104 toward the bottom face 106, for increasing the contact surface of the paver with the ground, while limiting the visible surface of concrete when viewed from above. For a more rigid structure, the side surfaces 154 of the recessed portions 126, 127 are inclined, the recessed portions widening toward the bottom face 106, with their inner sidewalls 154 flaring from their upper surface to the bottom surface.

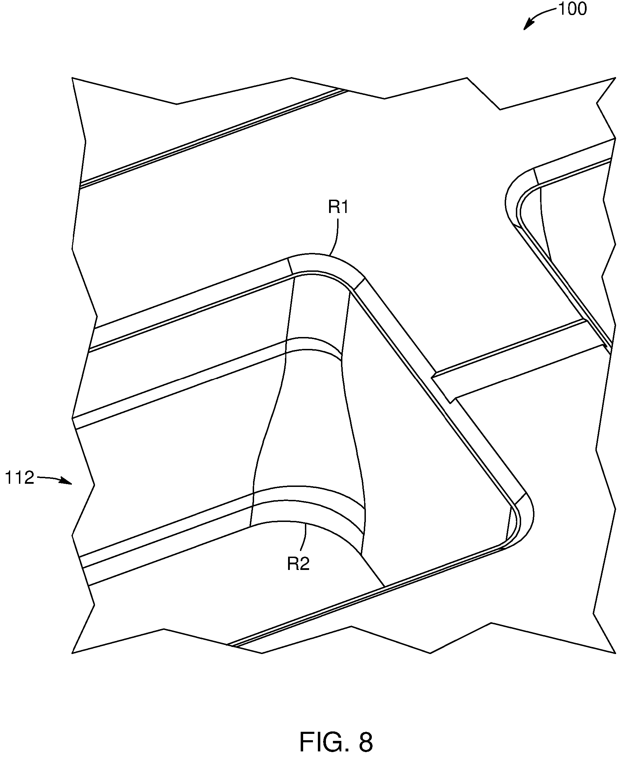

Referring to FIG 8, a close-up view of one of the "corners" of the inner opening 112 of a grass paver 100 of the invention is provided. In this embodiment, the intersection of a longitudinal member and of a transverse member defines a first radius of curvature R1, delineating the inner opening 112 near the top face 104 of the unitary body. The intersection also defines a second radius of curvature R2 near the bottom face 106 of the body, the second radius of curvature R2 being greater than the first radius of curvature R1. A variable radius of curvature along the height of the paver, at the intersection of the transverse and longitudinal members allows greater structural properties while preserving aesthetics. Indeed, material toward the bottom of the grass paver has a greater impact on the overall strength of the paver than at the top of the paver, especially for resisting to flexural loads. The inner opening 112 can allow water to drain directly from the top face 104 into the ground underneath the grass paver 100. This configuration can increase the drainage capabilities of the grass paver 100. The inner opening 112 may have a rectangular shape, or any other suitable shape for an appealing pattern, draining capability and maintaining a rigid structure comparable to solid pavement pavers.

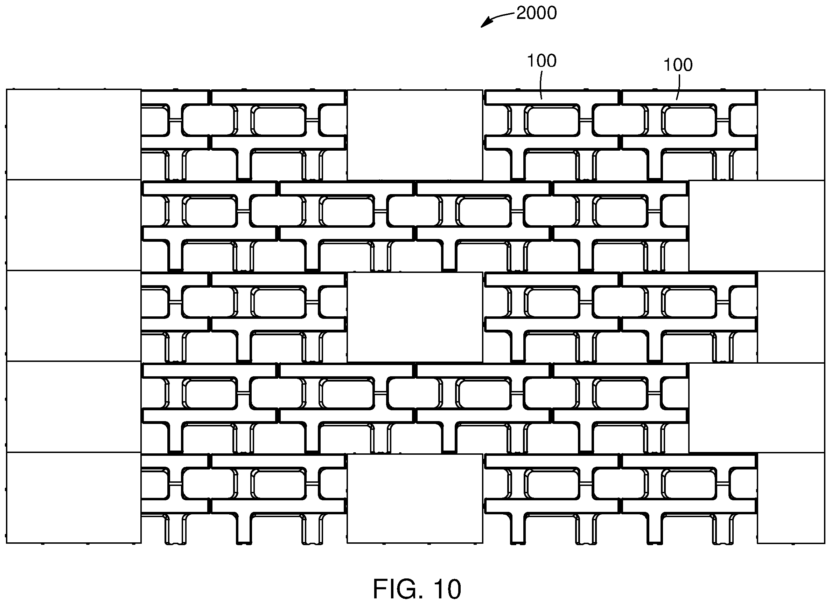

Referring now to FIGs. 9 and 10, two different paver arrangements 1000, 2000 are shown, illustrating some of the many possible paver arrangements which can be created with grass pavers are described above. In FIG.9, on the left side of the figure, different variants of grass pavers are used, including grass pavers 100, 100', assembled in a running bond configuration. Some of the grass pavers 100 have their recessed portions located in a different pattern relative to other ones 100' of the grass pavers. This can allow for different patterns or paver arrangements. On the right side of the figure, the grass pavers are shown with grass or other filling material, provided in the inner openings and on the recessed portions of the pavers. As can be appreciated, the visible surface ratio of the pavers is about 40%. With only a few different variants of grass pavers, the paver arrangement 1000 has a completely random look. In the present case, six different configurations of grass pavers are used. The combined voids 148, 148' formed by adjacent inner and partial openings 112, 120 can have a length I which is longer than the length L of a single grass paver. The paver arrangement resulting from a random assembly of grass pavers according to the invention provides openings having different sizes, when vegetation or other filling material is used to complement the paver arrangement. A set of grass pavers having the same outer contour, and provided with recessed portions positioned differently from one paver to the other, allows creating a random-look arrangement, with openings having different sizes.

In FIG. 10, another possible paver arrangement 2000 is shown. In this case, a single variant of a grass paver 100 is used, in combination with rectangular paving blocks. Given the rectangular overall surface area of the grass pavers 100, they can be easily combined and assembled with standard block pavers, to form yet other random looking paver arrangements.

Referring to FIGs. 1 and 2, the grass pavers 100, 100' preferably comprise a water-repellant compound mixed with the concrete or cementitious material forming the pavers. Alternatively, a water-repellant spray can be applied on an outer surface of the grass pavers, at the manufacturing plant, prior to being packaged. The water-repellant can be added to make the grass paver water-resistant/impermeable and prevents the material of the grass paver from absorbing moisture. The grass pavers comprising water-repellant preferably absorb less than 1% of water. Water can therefore drain over the grass pavers and into the underlying soil to help watering the grass and/or other green vegetation.

As is evident from the disclosure herein, the invention describes an improved turfstone or grass paver which increases the amount of visible grass, increases the amount of water which can be drained, and can be assembled in a visual appealing and random pattern, all the while providing a rigid structure which is more resistant to degradation and is more efficient to fabricate and ship. The present invention provides grass pavers with large openings, and even larger combined openings/voids when assembled with one another, and thus improves growth of grass and other vegetation, while being able to support substantial loads according to industry standards.

## Claims

1. A set of grass pavers (100) for creating a paver arrangement, each of said grass pavers comprising :
- a unitary body (101) having a bottom face (106) for contacting a ground surface and an exposed top face (104) for visual exposure, the unitary body (101) comprising :
∘ intersecting longitudinal members (108) and transverse members (110) forming an inner opening (112) for growing grass or for receiving other material, said inner opening having an inner opening area (114);
∘ the longitudinal members (108) and transverse members (110) having respective extremities (116, 118) protruding outwardly from the inner opening (112), pairs of adjacent extremities forming partial openings (120) having respective partial opening areas, said partial openings being configured to form complete openings (124) when the grass paver is assembled with adjacent grass pavers ;
wherein at least one of the longitudinal members and of the transverse members (108, 110) has a recessed portion (126) adjacent to the inner opening (112), the recessed portion having an upper face (128) extending below the exposed top face (104) of the unitary body, said recessed portion being hidden by grass or said other material when the grass paver is installed and in use in said paver arrangement;
- an overall surface area (130) delimited by the extremities of said longitudinal and transverse members ;
- a void surface area (148) corresponding to a sum of the inner opening area and the partial opening areas, and
- a void ratio, defined as the void surface area over the overall area, greater than 50%;
**characterized in that**:
- the longitudinal members (108) consist of a single pair of parallel longitudinal members;
- the transverse members (110) consist of a single pair of parallel transverse members;
- the pair of parallel longitudinal members (108) and the pair of parallel transverse members (110) thereby forming a single inner opening (112) per paver;
- the recessed portion (126) adjacent to the inner opening (112) is on a first one of the pair of transverse members; an additional recessed portion (127) being on the second one of the pair of transverse member; and
- the extremities of the transverse members protrude on a single one of the longitudinal members.

2. The set of grass pavers according to claim 1, wherein the void ratio is determined at an upper-face plane (146) level corresponding to the exposed top faces of the grass pavers.

3. The set of grass pavers according to claim 1 or 2, wherein at least one of the grass pavers has a visible surface area (132) corresponding to the exposed top face of the unitary body, and wherein a visible ratio, defined as the visible surface area over the overall surface area, is equal or less than 40%.

4. The set of grass pavers according to any one of claims 1 to 3, wherein at least one of the grass pavers has its recessed portion (126) located in a different pattern relative to the other ones of the grass pavers.

5. The set of grass pavers according to any one of the preceding claims, wherein at least one of said grass pavers with the additional recessed portion (127) has its additional recessed portion located in a different pattern relative to the other ones of the grass pavers.

6. The set of grass pavers according to any one of the preceding claims, wherein the recessed portions (126) adjacent to the inner opening and to the partial openings widen toward the bottom face (106).

7. The set of grass pavers according to any one of the preceding claims, wherein for each of the grass pavers, the longitudinal members (108) have respective inner sidewalls (134) facing the inner opening, said inner sidewalls flaring from the exposed top face toward the bottom face.

8. The set of grass pavers according to any one of the preceding claims, wherein each of the grass pavers comprises a water-repellant compound mixed with a material forming the grass pavers.

9. The set of grass pavers according to any one of the preceding claims, wherein each of the grass pavers comprises a water-repellant compound applied on an outer surface of the grass paver.

10. The set of grass pavers according to any one of the preceding claims , wherein for each of the grass pavers, intersection of one of the longitudinal members (108) and one of the transverse members (110) defines a first radius of curvature delineating the inner opening near the top face of the unitary body, and define a second radius of curvature near the bottom face of the body, the second radius of curvature being greater than the first radius of curvature.

11. The set of grass pavers according any one of the preceding claims, wherein for each of the grass pavers, the longitudinal members (108) and the transverse member (110) include indentations (136) or projections (138) on an outer sidewall thereof, for interlocking of the grass paver with adjacent grass pavers.

12. The set of grass pavers according to any one of the preceding claims , wherein each of the grass pavers has a height (H) defined between the top face (104) and the bottom face (106), and wherein the extremities of the longitudinal members and of the transverse members have end sidewalls that are concavely shaped or convexly shaped along said height, for vertically interlocking a given grass paver of said set of pavers with adjacent grass pavers.

13. The set of grass pavers according to any one of the preceding claims , wherein for at least some of the grass pavers, the longitudinal members (108) have respective upper faces lying exclusively in one upper-face plane.

14. The set of grass pavers according to any one of the preceding claims, wherein for each of the grass pavers, the inner opening has a rectangular shape.

15. The set of grass pavers according to any one of the preceding claims, wherein for each of the grass pavers, the longitudinal members (108) define a length of the grass paver, and the transverse members (110) define a width of the grass paver, said overall surface area being obtained by multiplying said length and said width.

16. The set of grass pavers according to any one of the preceding claims, wherein the grass pavers are installed in a stack bond or a running bond paver arrangement.

## Patentansprüche

1. Satz von Grasplatten (100) zum Erzeugen einer Plattenanordnung, wobei jede der Grasplatten Folgendes umfasst:
- einen Einheitskörper (101) mit einer untere Seite (106), um mit einer Bodenfläche in Kontakt zu kommen, und einer ausgesetzten oberen Fläche (104) zur visuellen Aussetzung, wobei der Einheitskörper (101) Folgendes umfasst:
∘ Überschneiden von Längselementen (108) und Querelementen (110), die eine innere Öffnung (112) bilden, um Gras wachsen zu lassen oder um ein anderes Material aufzunehmen, wobei die innere Öffnung einen inneren Öffnungsbereich (114) umfasst;
∘ wobei die Längselemente (108) und die Querelemente (110) jeweilige Enden (116, 118) aufweisen, die von der inneren Öffnung (112) nach außen vorspringen, wobei Paare von benachbarten Endungen teilweise Öffnungen (120) bilden, die jeweilige teilweise Öffnungsbereiche aufweisen, wobei die teilweisen Öffnungen konfiguriert sind, um vollständige Öffnungen (124) zu bilden, wenn die Grasplatte mit benachbarten Glasplatten montiert ist;
wobei mindestens eines der Längselemente und der Querelemente (108, 110) einen ausgesparten Abschnitt (126) benachbart der inneren Öffnung (112) aufweist, wobei der ausgesparte Abschnitt eine obere Seite (128) aufweist, die sich unter der ausgesetzten oberen Seite (104) des Einheitskörpers erstreckt, wobei der ausgesparte Abschnitt durch Gras oder das andere Material verborgen ist, wenn die Grasplatte in der Plattenanordnung installiert und in Verwendung ist;
- einen gesamten Oberflächenbereich (130), der durch die Enden der Längs- und Querelemente begrenzt ist;
- einen leeren Oberflächenbereich (148), der einer Summe des inneren Öffnungsbereichs und der teilweisen Öffnungsbereich entspricht, und
- ein Leerverhältnis, das als der leere Oberflächenbereich zum gesamten Bereich definiert ist, der größer als 50 % ist;
**dadurch gekennzeichnet, dass**:
- die Längselemente (108) aus einem einzigen Paar paralleler Längselemente bestehen;
- die Querelemente (110) aus einem einzigen Paar paralleler Querelemente bestehen;
- wobei das Paar paralleler Längselemente (108) und das Paar paralleler Querelemente (110) dadurch eine einzige innere Öffnung (112) pro Platte bilden;
- der ausgesparte Abschnitt (126) benachbart der inneren Öffnung (112) auf einem ersten des Paars von Querelementen angeordnet ist; ein zusätzlicher ausgesparter Abschnitt (127) auf dem zweiten des Paars von Querelementen angeordnet ist; und
- die Enden der Querelemente auf einem einzigen der Längselemente vorspringen.

2. Satz von Grasplatten nach Anspruch 1, wobei das Leerverhältnis auf einem Niveau der Ebene der oberen Seite (146) bestimmt ist, das den ausgesetzten oberen Seiten der Grasplatten entspricht.

3. Satz von Grasplatten nach Anspruch 1 oder 2, wobei mindestens eine der Grasplatten einen sichtbaren Flächenbereich (132) aufweist, der der ausgesetzten oberen Seite des Einheitskörpers entspricht, und wobei ein sichtbares Verhältnis, definiert als ein sichtbarer Flächenbereich zum gesamten Oberflächenbereich, gleich wie oder weniger als 40 % ist.

4. Satz von Grasplatten nach einem der Ansprüche 1 bis 3, wobei mindestens eine der Grasplatten einen ausgesparten Abschnitt (126) aufweist, der in einem verschiedenen Muster mit Bezug auf die anderen der Grasplatten angeordnet ist.

5. Satz von Grasplatten nach einem der vorhergehenden Ansprüche, wobei bei mindestens einer der Grasplatten mit dem zusätzlichen ausgesparten Abschnitt (127) der zusätzliche ausgesparte Abschnitt in einem verschiedenen Muster mit Bezug auf die anderen der Grasplatten angeordnet ist.

6. Satz von Grasplatten nach einem der vorhergehenden Ansprüche, wobei sich die ausgesparten Abschnitte (126) benachbart der inneren Öffnung und der teilweisen Öffnungen hin zur unteren Seite (106) erweitern.

7. Satz von Grasplatten nach einem der vorhergehenden Ansprüche, wobei bei jeder der Grasplatten die Längselemente (108) entsprechende innere Seitenwände (134) aufweisen, die der inneren Öffnung gegenüberliegen, wobei sich die inneren Seitenwände von der ausgesetzten oberen Seite hin zur unteren Seite ausweiten.

8. Satz von Grasplatten nach einem der vorhergehenden Ansprüche, wobei jede der Grasplatten eine wasserabweisende Verbindung umfasst, die mit einem Material gemischt ist, das die Grasplatten bildet.

9. Satz von Grasplatten nach einem der vorhergehenden Ansprüche, wobei jede der Grasplatten eine wasserabweisende Verbindung umfasst, die auf eine äußere Fläche des Grasplatte angewendet wird.

10. Satz von Grasplatten nach einem der vorhergehenden Ansprüche, wobei bei jeder der Grasplatten die Überschneidung eines der Längselemente (108) und eines der Querelemente (110) einen ersten Krümmungsradius definiert, der die innere Öffnung neben der oberen Seite des Einheitskörpers begrenzt, und einen zweiten Krümmungsradius neben der unteren Seite des Körpers definiert, wobei der zweite Krümmungsradius größer als der erste Krümmungsradius ist.

11. Satz von Grasplatten nach einem der vorhergehenden Ansprüche, wobei bei jeder der Grasplatten die Längselemente (108) und die Querelemente (110) Einkerbungen (136) oder Vorsprünge (138) auf einer äußeren Seitenwand davon einschließen, um die Grasplatte mit angrenzenden Glasplatten zu verzahnen.

12. Satz von Grasplatten nach einem der vorhergehenden Ansprüche, wobei jede der Glasplatten eine Höhe (H) aufweist, die zwischen der oberen Seite (104) und der unteren Seite (106) definiert ist, und wobei die Enden der Längselemente und der Querelemente Endseitenwände aufweisen, die entlang der Höhe konkav geformt oder konvex geformt sind, um vertikal eine bestimmte Grasplatte des Satzes von Grasplatten mit benachbarten Grasplatten zu verzahnen.

13. Satz von Grasplatten nach einem der vorhergehenden Ansprüche, wobei bei mindestens einigen der Grasplatten die Längselemente (108) jeweilige obere Seiten aufweisen, die ausschließlich in der Ebene der oberen Seite liegen.

14. Satz von Grasplatten nach einem der vorhergehenden Ansprüche, wobei bei jeder der Grasplatten die innere Öffnung einer rechtwinklige Form aufweist.

15. Satz von Grasplatten nach einem der vorhergehenden Ansprüche, wobei bei jeder der Grasplatten die Längselemente (108) eine Länge der Grasplatte definieren, und die Querelemente (110) eine Breite der Grasplatte definieren, wobei der gesamte Oberflächenbereich durch Multiplizieren der Länge und der Breite erhalten wird.

16. Satz von Grasplatten nach einem der vorhergehenden Ansprüche, wobei die Grasplatten in einer Stapelverbindung oder einer Laufverband-Plattenanordnung installiert sind.

## Revendications

1. Un jeu de pavés alvéolés (100) pour créer un arrangement de pavés, chacun des pavés alvéolés comprenant :
- un corps unitaire (101) ayant une face du dessous (106) pour contacter une surface du sol et ayant une face exposée (104) pour être exposée visuellement, le corps unitaire (101) comprenant :
∘ des membres longitudinaux (108) et des membres transverses (110) se croisant et formant une ouverture interne (112) où peuvent pousser des herbes ou pour recevoir d'autres matériaux, ladite ouverture interne (112) ayant une aire d'ouverture interne (114);
∘ les membres longitudinaux (108) et les membres transverses (110) ayant des extrémités respectives (116,118) dépassant vers l'extérieur de l'ouverture interne (112), des paires d'extrémités adjacentes formant des ouvertures partielles (120) ayant des aires d'ouvertures partielles respectives, lesdites ouvertures partielles étant configurées pour former des ouvertures complètes (124) lorsque le pavé alvéolé est assemblé avec des pavés alvéolés adjacents;
dans lequel au moins un des membres longitudinaux et des membres transverses (108, 110) a des portions en retrait (126) adjacentes aux ouvertures internes (112), les portions en retrait ayant une face de dessus (128) s'étendant en dessous de la face exposée (104) du corps unitaire, la portion en retrait étant cachée par les herbes ou autres matériaux lorsque le pavé alvéolé est installé et en usage dans l'arrangement de pavés;
- une surface totale (130) du pavé étant délimitée par les extrémités desdits membres longitudinaux et transverses;
- une surface de vide (148) correspondant à la somme de l'aire d'ouverture interne (114) et des aires d'ouvertures partielles (120); et
- un ratio de vide, défini par la surface de vide (148) sur la surface totale (130) étant supérieure à 50%;
**caractérisé en ce que** :
- les membres longitudinaux (108) consistent en une seule paire de membres longitudinaux parallèles;
- les membres transverses (110) consistent en une seule paire de membres transverses parallèles;
- la paire de membres longitudinaux parallèles (108) et la paire de membres transverses parallèles (110) forment une seule ouverture interne (112) par pavé;
- la portion en retrait (126) adjacente à l'ouverture interne (112) est sur un premier des membres transverses de la paire, et une portion additionnelle en retrait (127) est sur un second des membres transverses de la paire; et
- les extrémités des membres transverses dépassent d'un seul des membres longitudinaux.

2. Le jeu de paves alvéolés selon la revendication 1, dans lequel le ratio de vide est déterminé au niveau du plan de face de dessus (146) correspondant aux faces exposées des pavés alvéolés.

3. Le jeu de pavés alvéolés selon la revendication 1 ou 2, dans lequel au moins un des pavés alvéolés a une aire de surface visible (132) correspondant à la face de dessus exposée du corps unitaire, dans lequel un ratio visible, défini par la surface visible sur la surface totale, est égal ou inférieur à 40%.

4. Le jeu de pavés alvéolés selon l'une quelconque des revendications 1 à 3, dans lequel au moins un des pavés alvéolés a sa portion en retrait (126) située de façon à former un motif différent relativement aux autres des pavés alvéolés.

5. Le jeu de pavés alvéolés selon l'une quelconque des revendications précédentes, dans lequel au moins un desdits pavés alvéolés avec une portion en retrait additionnelle a cette portion additionnelle en retrait située pour former un motif différent par rapport aux autres pavés alvéolés.

6. Le jeu de pavés alvéolés selon l'une quelconque des revendications précédentes, dans lequel les portions en retrait (126) adjacentes à l'ouverture interne et aux ouvertures partielles s'élargissent vers la face du dessous (106).

7. Le jeu de pavés alvéolés selon l'une quelconque des revendications précédentes, dans lequel pour chacun des pavés alvéolés, les membres longitudinaux ont des parois internes (134) faisant face à l'ouverture interne, les parois internes s'évasant de la face exposée vers la face du dessous.

8. Le jeu de pavés alvéolés selon l'une quelconque des revendications précédentes, dans lequel chacun des pavés alvéolés comprend une composition repoussante pour l'eau mélangée au matériel formant le pavé alvéolé.

9. Le jeu de pavés alvéolés selon l'une quelconque des revendications précédentes, dans lequel chacun des pavés alvéolés comprend une composition repoussante pour l'eau appliquée sur la surface externe du pavé alvéolé.

10. Le jeu de pavés alvéolés selon l'une quelconque des revendications précédentes, dans lequel pour chacun des pavés alvéolés, l'intersection de l'un des membres longitudinaux avec l'un des membres tranverses définit un premier rayon de courbure délimitant l'ouverture interne près de la face du dessus du corps unitaire, et définit un second rayon de courbure près de la face du dessous du corps, le second rayon étant plus grand que le premier rayon de courbure.

11. Le jeu de pavés alvéolés selon l'une quelconque des revendications précédentes, dans lequel pour chacun des pavés alvéolés, les membres longitudinaux (108) et les membres transverses (110) incluent des indentations or des projections sur leur paroi externe, pour imbriquer les pavés alvéolés les uns avec les autres.

12. Le jeu de pavés alvéolés selon l'une quelconque des revendications précédentes, dans lequel chacun des pavés alvéolés a une hauteur (H) définie entre une face du dessus (104) et une face du dessous (106), et dans lequel les extrémités des membres longitudinaux et des membres transverses ont des parois de bout qui ont une forme concave ou convexe le long de la hauteur, pour imbriquer verticalement un pavé alvéolé donné avec d'autres pavés alvéolés adjacents du jeu de pavés alvéolés.

13. Le jeu de pavés alvéolés selon l'une quelconque des revendications précédentes, dans lequel pour au moins certains des pavés alvéolés, des membres longitudinaux ont des faces de dessus s'étendant exclusivement dans un plan de face supérieure.

14. Le jeu de pavés alvéolés selon l'une quelconque des revendications précédentes, dans lequel pour chacun des pavés alvéolés, l'ouverture interne a une forme rectangulaire.

15. Le jeu de pavés alvéolés selon l'une quelconque des revendications précédentes, dans lequel pour chacun des pavés alvéolés, les membres longitudinaux (108) définissent une longueur du pavé alvéolé, et les membres transverses (110) définissent une largeur du pavé alvéolé, la surface totale étant obtenue en multipliant ladite longueur et ladite largeur.

16. Le jeu de pavés alvéolés selon l'une quelconque des revendications précédentes, dans lequel les pavés alvéolés sont installés dans un arrangement de brique horizontale ou de droite horizontale.
